# EUROPÄISCHE PATENTSCHRIFT

(11) **EP 3 796 172 B1**
(45) Veröffentlichungstag und Bekanntmachung des Hinweises auf die Patenterteilung: **26.10.2022**
(21) Anmeldenummer: 19198011.9
(22) Anmeldetag: 18.09.2019
(51) Int. Cl.: G06F 11/07

(54) **VERFAHREN ZUR ÜBERWACHUNG VON AUSGANGSSIGNALEN**
METHOD FOR MONITORING OUTPUT SIGNALS
PROCÉDÉ DE SURVEILLANCE DE SIGNAUX DE SORTIE

(43) Veröffentlichungstag der Anmeldung: 24.03.2021
(73) Patentinhaber: Siemens Mobility GmbH, 81739 München (DE)
(72) Erfinder: Griebel, Stephan, 38302 Wolfenbüttel (DE)

(56) Entgegenhaltungen:
- EP-A1- 2 254 039
- DE-A1- 3 411 015
- US-B2- 7 139 644

## Beschreibung

Es wird ein Verfahren zur Überwachung von Ausgangssignalen eines elektronischen Systems angegeben. Darüber hinaus werden ein Computerprogramm und eine Anordnung angegeben. Ausgangssignale eines elektronischen Systems werden in der Regel durch integrierte Überwachungselemente überwacht, die in das System eingebettet sind. Hierbei können Funktionsstörungen des elektronischen Systems auftreten, die nicht durch die integrierten Überwachungselemente erfassbar sind. Dokument EP 2254039 A beschreibt ein visuelles Anzeigemodul und zeigt Informationen basierend auf einem Eingangssignal an. Das Anzeigemodul erzeugt eine als Anzeigetreibersignal codierte grafische Darstellung eines numerischen oder logischen Werts, der durch das Eingangssignal bereitgestellt wird. Die graphische Darstellung wird von einem Anzeige-Überwacher verifiziert, der dazu eingerichtet ist, auf der Grundlage des Anzeigetreibersignals berechnete Prüfsummen mit Referenzprüfsummen zu vergleichen, die auf der Grundlage des Eingangssignals erzeugt werden.

Dokument US 7139644 B beschreibt ein Verfahren und System zum Übertragen von Informationen über ein Flugzeug. Das an Bord eines Flugzeugs mitgeführte System umfasst eine Vorrichtung des Avioniktyps, die ein Mittel zum Bestimmen eines ersten Prüfcodes umfasst, der für die Informationen repräsentativ ist. Diese werden auf einem Bildschirm eines Schnittstellenmittels angezeigt, wobei die Vorrichtung die Informationen über eine Verbindung an das Schnittstellenmittel überträgt, wobei das Schnittstellenmittel ein Mittel zum Bestimmen eines Bildes ist, das der Darstellung der übertragenen Informationen entspricht.

Dokument DE 3411015 A betrifft ein Verfahren zur fehlersicheren Darstellung eines Schaubildes auf einem Datenanzeigegerät, bei dem die dem Datenanzeigegerät zugeführten Bilddaten ständig dadurch überprüft werden, dass durch Datenreduktion aus den Bilddaten ein Testcode gebildet wird.

Eine zu lösende Aufgabe besteht darin, ein Verfahren, ein Computerprogramm und eine Anordnung anzugeben, mit denen Ausgangssignale eines elektronischen Systems besonders sicher überwacht werden können.

Diese Aufgabe wird durch das Verfahren und die Gegenstände der Patentansprüche 1, 7 und 8 gelöst. Vorteilhafte Ausgestaltungen, Implementierungen und Weiterbildungen sind Gegenstand der abhängigen Patentansprüche. Der Offenbarungsgehalt der Patentansprüche ist hierbei ausdrücklich in die vorliegende Beschreibung aufgenommen.

Zunächst wird das Verfahren zur Überwachung von Ausgangssignalen eines elektronischen Systems erläutert. Bei einem oder mehreren Ausgangssignalen handelt es sich beispielsweise um elektrische Signale, optische Signale und/oder akustische Signale.

Erfindungsgemäß wird im elektronischen System aus zumindest einem Eingangssignal zumindest ein Ausgangssignal erzeugt. In einer Ausführungsform umfasst das elektronische System einen integrierten Schaltkreis. Das zumindest eine Eingangssignal kann in den integrierten Schaltkreis eingekoppelt oder eingegeben werden. Das eingekoppelte oder eingegebene Eingangssignal kann nachfolgend vom integrierten Schaltkreis transformiert werden und als zumindest ein Ausgangssignal aus dem integrierten Schaltkreis ausgekoppelt oder ausgegeben werden. Der integrierte Schaltkreis gibt in diesem Fall das zumindest eine Ausgangssignal in Abhängigkeit des zumindest einen Eingangssignals vor.

Erfindungsgemäß umfasst das Verfahren einen Schritt A), in dem eine erste Information erfasst wird, die repräsentativ für das zumindest ein Eingangssignal ist.

In dieser Ausführungsform ist die erste Information beispielsweise repräsentativ für einen Sollzustand des zumindest einen Ausgangssignals. Das heißt, durch das zumindest eine Eingangssignal ist ein Sollzustand des zumindest einen Ausgangssignals vorgegeben.

Erfindungsgemäß umfasst das Verfahren einen Schritt B), in dem eine zweite Information erfasst wird, die repräsentativ für das zumindest eine Ausgangssignal ist.

Beispielsweise ist die zweite Information repräsentativ für einen Istzustand des zumindest einen Ausgangssignals. Der Istzustand repräsentiert den tatsächlichen Zustand des zumindest einen Ausgangssignals.

Erfindungsgemäß umfasst das Verfahren einen Schritt C), in dem die erste Information und/oder die zweite Information für einen computerimplementierten Algorithmus bereitgestellt werden. Der Algorithmus ist hier bevorzugt zur Überwachung von Ausgangssignalen des elektronischen Systems ausgebildet. Erfindungsgemäß umfasst das Verfahren einen Schritt D), in dem eine erste Vergleichsinformation durch den Algorithmus in Abhängigkeit der ersten Information bestimmt wird. Bevorzugt ordnet der Algorithmus der ersten Information eineindeutig eine erste Vergleichsinformation zu.

Erfindungsgemäß wird im Schritt D) zusätzlich eine zweite Vergleichsinformation durch den Algorithmus in Abhängigkeit der zweiten Information bestimmt. Bevorzugt ordnet der Algorithmus der zweiten Information eineindeutig eine zweite Vergleichsinformation zu.

Erfindungsgemäß sind die erste Vergleichsinformation und die zweite Vergleichsinformation direkt miteinander vergleichbar, insbesondere wenn das zumindest eine Eingangssignal und das zumindest eine Ausgangssignal oder die erste Information und die zweite Information nicht direkt miteinander vergleichbar sind.

Handelt es sich bei dem zumindest einen Eingangssignal beispielsweise um ein elektrisches Signal und bei dem zumindest einen Ausgangssignal um ein optisches Signal, ist die erste Information repräsentativ für das elektrische Signal und die zweite Information repräsentativ für das optische Signal. Durch den Algorithmus werden diese nicht direkt vergleichbaren Signale jeweils einer ersten Vergleichsinformation und einer zweiten Vergleichsinformation zugeordnet, die direkt miteinander verglichen werden können.

Direkt miteinander vergleichbar heißt hier beispielsweise, dass es sich bei der ersten Vergleichsinformation und der zweiten Vergleichsinformation oder der zweiten Information jeweils um Computerdaten oder um einen Computerdatensatz einer gleichen Art handelt. Die Computerdaten oder der Computerdatensatz repräsentieren beispielsweise Zahlenwerte oder einen bestimmten Funktionsbegriff, wie etwa einen Signalbegriff. Beispielsweise ist zumindest einem Signalbegriff zumindest eine Signalbedeutung zugeordnet. Bei dem Signalbegriff handelt es sich in diesem Fall beispielsweise um eine Zeichenfolge und bei der zugeordneten Signalbedeutung um eine verbale Beschreibung des Signalbegriffs.

Handelt es sich bei der ersten Vergleichsinformation beispielsweise um Zahlenwerte, so handelt es sich bei der zweiten Vergleichsinformation oder zweiten Information bevorzugt auch um Zahlenwerte. Handelt es sich bei der ersten Vergleichsinformation beispielsweise um einen Funktionsbegriff, so handelt es sich bei der zweiten Vergleichsinformation oder zweiten Information bevorzugt auch um einen Funktionsbegriff.

Erfindungsgemäß umfasst das Verfahren einen Schritt E), in dem die erste Vergleichsinformation mit der zweiten Vergleichsinformation verglichen wird. Beispielsweise umfasst der Vergleich eine Vergleichsvorschrift, die ermittelt, ob die erste Vergleichsinformation und die zweite Information oder die erste Vergleichsinformation und die zweite Vergleichsinformation gleich oder im Wesentlichen gleich sind. Handelt es sich bei der erste Vergleichsinformation und der zweiten Vergleichsinformation oder der zweiten Information um Zahlenwerte bedeutet im Wesentlichen gleich hier beispielsweise, dass die Zahlenwerte innerhalb vorgebbarer Grenzen gleich sind. Handelt es sich bei der erste Vergleichsinformation und der zweiten Vergleichsinformation oder der zweiten Information um Funktionsbegriffe bedeutet im Wesentlichen gleich hier beispielsweise, dass die Funktionsbegriffe gleich sind. Insbesondere weisen die Funktionsbegriffe in diesem Fall eine gleiche Zeichenabfolge auf.

Erfindungsgemäß umfasst das Verfahren einen Schritt F), in dem ein Fehlersignal zur Signalisierung eines Fehlers erzeugt wird, falls der Vergleich negativ ist. In dieser Ausführungsform ist der Vergleich negativ, wenn die erste Vergleichsinformation nicht gleich zur zweiten Information oder wenn die erste Vergleichsinformation nicht gleich der zweiten Vergleichsinformation ist.

Bei dem Fehlersignal handelt es sich bevorzugt um ein in einem Computer erzeugtes Computersignal. Bei dem Computersignal handelt es sich beispielsweise um eine Handlungsaufforderung an einen Benutzer, an einen Bediener und/oder an ein Stellwerksystem.

Bei der Durchführung des erfindungsgemäßen Verfahrens zur Überwachung von Ausgangssignalen eines elektronischen Systems wird im elektronischen System aus zumindest einen Eingangssignal zumindest ein Ausgangssignal erzeugt. Das Verfahren umfasst folgende Schritte:
A) Erfassen einer ersten Information, die repräsentativ für das zumindest eine Eingangssignal ist,
B) Erfassen einer zweiten Information, die repräsentativ für das zumindest eine Ausgangssignal ist,
C) Bereitstellen der ersten Information und der zweiten Information für einen computerimplementierten Algorithmus,
D) Bestimmen einer ersten Vergleichsinformation durch den Algorithmus in Abhängigkeit der ersten Information und Bestimmen einer zweiten Vergleichsinformation durch den Algorithmus in Abhängigkeit der zweiten Information,
E) Vergleich der ersten Vergleichsinformation mit der zweiten Vergleichsinformation, und, falls der Vergleich negativ ist,
F) Erzeugen eines Fehlersignals zur Signalisierung eines Fehlers.

Das Verfahren ist insbesondere auf einem Computer ausführbar. Weiterhin wird das Verfahren bevorzugt in der angegebenen Reihenfolge durchgeführt. Alternativ wird der Schritt B) vor dem Schritt A) ausgeführt.

In der Regel wird eine Funktionsweise eines elektronischen Systems mittels in dem elektronischen System eingebetteten Überwachungselementen überwacht. Ist das elektronische System dazu ausgebildet zumindest ein Ausgangsignal zu erzeugen, wird dieses zumindest eine Ausgangssignal nicht durch die in dem System eingebetteten Überwachungselemente überwacht.

Eine Idee der vorliegenden Anmeldung ist es, unter anderem, durch ein Verfahren, das im elektronischen System implementiert ist, die Ausgangssignale des elektronischen Systems zu überwachen. Vorteilhafterweise ist so eine unabhängige, parallele Überwachung der Ausgangssignale in Abhängigkeit der Eingangssingale ermöglicht.

Gemäß der erfindungsgemäßen Ausgestaltung des Verfahrens umfasst das elektronische System eine Signalanzeige für ein Schienenfahrzeug und eine Steuerkomponente zum Steuern der Signalanzeige. Das Schienenfahrzeug kann ein Zug oder ein Teil eines Zuges sein.

Weiterhin kann die Signalanzeige einen Signalschaltkasten umfassen, dem ein Signalschirm nachgeordnet ist. Die Signalanzeige, insbesondere der Signalschirm, ist dazu ausgebildet optische Signale auszusenden. Die optischen Signale entsprechen hierbei dem zumindest einen Ausgangssignal.

Die Steuerkomponente umfasst bevorzugt ein Stellwerksystem, dem ein Signalstellteil nachgeordnet ist. Die Steuerkomponente und die Signalanzeige sind bevorzugt durch eine Kommunikationsverbindung miteinander verbunden. Durch die Steuerkomponente wird das zumindest eine Eingangssignal bevorzugt erzeugt. Über die Kommunikationsverbindung kann das zumindest eine Eingangssignal an die Signalanzeige weitergeleitet werden.

Erfindungsgemäß werden Zustände der Signalanzeige durch die Steuerkomponente mittels Steuersignalen gesteuert. In diesem Fall entsprechen die Steuersignale den Eingangssignalen, die von der Steuerkomponente erzeugt werden. Die Steuersignale gelangen dann über die Kommunikationsverbindung zu der Signalanzeige. Bevorzugt werden die Steuersignale in den Signalschaltkasten eingekoppelt oder eingegeben, der bevorzugt einen Zustand des Signalschirms vorgibt.

Erfindungsgemäß umfasst die erste Information die Steuersignale. Alternativ umfasst die erste Information aus den Steuersignalen erzeugte Messsignale. Die Steuersignale werden beispielsweise direkt an der Kommunikationsverbindung abgegriffen, wodurch die erste Information erfasst wird. Alternativ werden über eine oder mehrere Mess- bzw. Erfassungseinrichtungen Messsignale aus den Steuersignalen an der Kommunikationsverbindung gewonnen. In diesem Fall handelt es sich bei der ersten Information um die aus den Steuersignalen erzeugte Messsignale.

Erfindungsgemäß umfasst die zweite Information eine Bildaufnahme zumindest eines der Zustände der Signalanzeige. Beispielsweise ist die Signalanzeige dazu ausgebildet Informationen in Form von Signalbegriffen zu übermitteln. Bevorzugt handelt es sich bei den übermittelten Signalbegriffen um optische Signale. Diese optischen Signale sind bevorzugt von einem Bediener des Schienenfahrzeugs, insbesondere dem Triebfahrzeugführer, erkennbar. Beispielsweise übermittelt die Signalanzeige einem Bediener des Schienenfahrzeugs Informationen und Aufträge über und/oder für einen Fahrweg.

Wie bereits erwähnt, wird im Schritt D) die erste Vergleichsinformation durch den Algorithmus in Abhängigkeit der ersten Information bestimmt und die zweite Vergleichsinformation wird durch den Algorithmus in Abhängigkeit der zweiten Information bestimmt.

Bevorzugt sind die Steuersignale eineindeutig zumindest einem Signalbegriff zugeordnet, der auf der Signalanzeige angezeigt wird. In diesem Fall ist die erste Information repräsentativ für die Steuersignale. Insbesondere ist der Algorithmus dazu ausgebildet den Steuersignalen eineindeutig zumindest einen Signalbegriff zuzuordnen. Das heißt, die erste Vergleichsinformation ist zumindest ein Signalbegriff.

Weiterhin bevorzugt sind die Ausgangssignale, insbesondere die optischen Signale, eineindeutig zumindest einem Signalbegriff zugeordnet. In diesem Fall ist die zweite Information repräsentativ für die Bildaufnahme des zumindest einen Zustands der Signalanzeige. Insbesondere ist der Algorithmus dazu ausgebildet den optischen Signalen eineindeutig zumindest einen Signalbegriff zuzuordnen. Das heißt, die zweite Vergleichsinformation ist zumindest ein Signalbegriff.

Wie bereits erwähnt, wird in dem Schritt E) die erste Vergleichsinformation mit der zweiten Vergleichsinformation verglichen. Handelt es sich bei der ersten Vergleichsinformation und der zweiten Vergleichsinformation jeweils um zumindest einen Signalbegriff, können diese direkt miteinander verglichen werden. Im Falle einer Diskrepanz der Signalbegriffe kann nachfolgend das Fehlersignal ausgegeben werden.

Gemäß zumindest einer Ausführungsform des Verfahrens umfasst der Algorithmus im Schritt D) eine erste Überwachungskomponente und/oder eine zweite Überwachungskomponente. Bevorzugt ist die erste Überwachungskomponente dazu ausgebildet die erste Vergleichsinformation zu bestimmen. Weiterhin ist die zweite Überwachungskomponente dazu ausgebildet die zweite Vergleichsinformation zu bestimmen.

Insbesondere ist die erste Überwachungskomponente dazu ausgebildet der ersten Information eineindeutig zumindest einen Signalbegriff zuzuordnen. Die erste Vergleichsinformation ist in diesem Fall der zugeordnete zumindest eine Signalbegriff. Weiterhin ist die zweite Überwachungskomponente bevorzugt dazu ausgebildet der zweiten Information eineindeutig zumindest einen Signalbegriff zuzuordnen. Die zweite Vergleichsinformation ist in diesem Fall der zugeordnete zumindest eine Signalbegriff. In dieser Ausführungsform sind die erste Überwachungskomponente und die zweite Überwachungskomponente vorteilhafterweise voneinander entkoppelt. Damit kann die erste Überwachungskomponente und die zweite Überwachungskomponente vorteilhafterweise getrennt, insbesondere räumlich getrennt, voneinander betrieben werden.

Gemäß zumindest einer Ausführungsform des Verfahrens wird die erste Überwachungskomponente des Algorithmus trainiert. In diesem Fall handelt es sich bei der ersten Überwachungskomponente um eine lernende erste Überwachungskomponente. Beispielsweise wird die erste Überwachungskomponente derart trainiert, dass zu der ermittelten ersten Information eine korrespondierende erste Vergleichsinformation von einem Benutzer eineindeutig vorgegeben wird, wodurch die erste Überwachungskomponente den Zusammenhang zwischen der entsprechenden ersten Information und der korrespondierenden ersten Vergleichsinformation maschinell/algorithmisch lernt.

Gemäß zumindest einer Ausführungsform des Verfahrens wird die zweite Überwachungskomponente des Algorithmus trainiert. Auch hier handelt es sich bei der zweiten Überwachungskomponente um eine lernende zweite Überwachungskomponente. Beispielsweise wird die zweite Überwachungskomponente derart trainiert, dass zu der ermittelten zweiten Information eine korrespondierende zweite Vergleichsinformation von einem Benutzer eineindeutig vorgegeben wird, wodurch die zweite Überwachungskomponente den Zusammenhang zwischen der entsprechenden zweiten Information und der korrespondierenden zweiten Vergleichsinformation maschinell/algorithmisch lernt.

Durch die Verwendung einer ersten Überwachungskomponente und einer zweiten Überwachungskomponente, die bevorzugt getrennt voneinander trainierbar und/oder ausführbar sind, können diese Überwachungskomponente vorteilhafterweise dezentral eingesetzt werden. In diesem Fall sind die erste Überwachungskomponente und die zweite Überwachungskomponente vorteilhafterweise voneinander entkoppelt. Durch eine derartige Entkopplung kann die erste Vergleichsinformation und/oder die zweite Vergleichsinformation besonders einfach erzeugt werden. Beispielsweise handelt es sich bei der ersten Information um ein von der zweiten Information verschiedenes Signal. In diesem Fall wird die erste Überwachungskomponente an die erste Information angepasst, während die zweite Überwachungskomponente an die zweite Information angepasst wird. Aus den verschiedenen Signalen kann so besonders einfach eine entsprechende Vergleichsinformation gebildet werden. Weiterhin werden beispielsweise verschiedene Genauigkeitsanforderungen an die erste Überwachungskomponente und die zweite Überwachungskomponente gestellt. Durch die getrennte Trainierbarkeit und/oder Ausführbarkeit können die erste Überwachungskomponente und die zweite Überwachungskomponente damit vorteilhafterweise genau an die geforderten Anforderungen angepasst werden.

Gemäß zumindest einer Ausführungsform des Verfahrens umfasst die erste Überwachungskomponente ein erstes künstliches neuronales Netzwerk. Das erste künstliche neuronale Netzwerk weist beispielswese zumindest eine verdeckte Schicht (englisch "hidden layer") auf. Insbesondere weist das erste künstliche neuronale Netzwerk eine einzige verdeckte Schicht auf.

Gemäß zumindest einer Ausführungsform umfasst die zweite Überwachungskomponente ein zweites künstliches neuronales Netzwerk. Das zweite künstliche neuronale Netzwerk weist beispielswese zumindest eine verdeckte Schicht auf. Insbesondere weist das zweite künstliche neuronale Netzwerk eine einzige verdeckte Schicht auf. Durch die Verwendung von jeweils einer einzigen verdeckten Schicht ist das erste künstliche neuronale Netzwerk und das zweite künstliche neuronale Netzwerk vorteilhafterweise besonders einfach implementierbar.

Weiterhin ist das Verfahren durch die Verwendung von künstlichen neuronalen Netzwerken besonders leicht an verschiedene Anforderungen anpassbar. Vorteilhafterweise ist so eine besonders hohe Flexibilität gegeben.

Alternativ umfassen die erste Überwachungskomponente und die zweite Überwachungskomponente ein gemeinsames künstliches neuronales Netzwerk. In diesem Fall weist das gemeinsame künstliche neuronale Netzwerk zumindest eine verdeckte Schicht auf.

Gemäß zumindest einer Ausführungsform des Verfahrens umfasst die Signalanzeige lichtemittierende Bauteile. Insbesondere umfasst der Signalschirm lichtemittierende Bauteile. Bei den lichtemittierenden Bauteilen handelt es sich beispielsweise um Glühlampen oder lichtemittierende Dioden. Die lichtemittierenden Bauteile können voneinander verschieden farbiges Licht emittieren. Weiterhin können die lichtemittierenden Bauteile in verschiedenen Mustern angeordnet sein.

Gemäß zumindest einer Ausführungsform des Verfahrens wird die Bildaufnahme durch eine Bilderfassungseinheit erzeugt. Bevorzugt handelt es sich bei der Bilderfassungseinheit um eine Videokamera. Die Videokamera ist dabei derart ausgebildet, dass sie die lichtemittierenden Bauteile vollständig erfassen kann. Weiterhin ist die Videokamera dazu ausgebildet die von den lichtemittierenden Bauteilen ausgesendeten optischen Signale in die zweite Information zu transformieren, insbesondere in Computerdaten oder in einen Computerdatensatz.

Gemäß zumindest einer Ausführungsform des Verfahrens umfasst die Steuerkomponente ein elektronisches Stellwerksystem.

Gemäß zumindest einer Ausführungsform des Verfahrens entsprechen die Steuersignale der Steuerkomponente einem elektrischen Strom. Der elektrische Strom kann beispielsweise direkt abgegriffen werden. Alternativ wird der elektrische Strom beispielsweise mittels einer induktiven Messung abgegriffen.

Gemäß zumindest einer Ausführungsform des Verfahrens umfasst die Steuerkomponente ein digitales Stellwerksystem. Das elektronische Stellwerksystem oder das digitale Stellwerksystem sind jeweils dazu ausgebildet einen Betrieb von Schienenfahrzeugen zu gewährleisten. Durch das Stellwerksystem können bevorzugt Stellungen von Fahrwegelementen, wie beispielsweise Weichen und Gleissperren, gesteuert werden.

Gemäß zumindest einer Ausführungsform des Verfahrens entsprechen die Steuersignale der Steuerkomponente Telegrammdaten. Die Telegrammdaten entsprechen bevorzugt Netzwerkdaten, die beispielsweise direkt die erste Information bilden.

Gemäß zumindest einer Ausführungsform des Verfahrens wird der Zustand der Signalanzeige ausschließlich durch das Verfahren überwacht. In dieser Ausführungsform kann vorteilhafterweise auf jegliche zusätzliche Überwachung der Signalanzeige verzichtet werden. Vorteilhafterweise kann damit auf zusätzliche Überwachungssysteme verzichtet werden.

Des Weiteren wird ein Computerprogramm erläutert. Das Computerprogramm umfasst Befehle, die bei der Ausführung des Computerprogramms durch einen Computer diesen veranlassen, das hier beschriebene Verfahren auszuführen.

Beispielsweise umfasst ein Computer lesbares Speichermedium das Computerprogramm, das bei der Ausführung durch einen Computer diesen veranlasst, das hier beschriebene Verfahren auszuführen.

Des Weiteren wird eine Anordnung erläutert.

Gemäß zumindest einer Ausführungsform umfasst die Anordnung ein elektronisches System, das dazu ausgebildet ist aus zumindest einem Eingangssignal zumindest ein Ausgangssignal zu erzeugen. Bevorzugt ist im elektronischen System aus zumindest einem Eingangssignal zumindest ein Ausgangssignal erzeugbar.

Gemäß zumindest einer Ausführungsform umfasst die Anordnung eine Überwachungseinheit zur Überwachung von Ausgangssignalen des elektronischen Systems. Beispielsweise umfasst die Überwachungseinheit eine erste Überwachungskomponente und/oder eine zweite Überwachungskomponente. Bevorzugt ist die die erste Überwachungskomponente trainierbar ausgebildet. Weiterhin bevorzugt ist die zweite Überwachungskomponente ebenfalls trainierbar ausgebildet.

Gemäß zumindest einer Ausführungsform ist die Überwachungseinheit so eingerichtet, dass diese ein hier beschriebenes Verfahren ausführt.

Gemäß zumindest einer Ausführungsform umfasst das elektronische System eine Signalanzeige für Schienenfahrzeuge und eine Steuerkomponente zum Steuern der Signalanzeige. Zustände der Signalanzeige sind bevorzugt durch die Steuerkomponente durch Steuersignale steuerbar.

Gemäß zumindest einer Ausführungsform ist die Überwachungseinheit zur Überwachung der Signalanzeige ausgebildet.

Gemäß zumindest einer Ausführungsform ist die Überwachungseinheit so ausgebildet, dass diese ein hier beschriebenes Verfahren ausführt.

Die oben genannten Eigenschaften, Merkmale und Vorteile der Erfindung und die Art und Weise, wie diese erreicht werden, werden durch die folgende Beschreibung der Ausführungsbeispiele der Erfindung in Verbindung mit den entsprechenden Figuren weitergehend erläutert. Gleiche, gleichartige oder gleich wirkende Elemente sind in den Figuren mit den gleichen Bezugszeichen versehen. Die Figuren und die Größenverhältnisse der in den Figuren dargestellten Elemente untereinander sind nicht als maßstäblich zu betrachten. Vielmehr können einzelne Elemente zur besseren Darstellbarkeit und/oder für eine bessere Verständlichkeit übertrieben groß dargestellt sein.

Es zeigen:
- Figuren 1, 2 und 3: eine schematische Darstellung einer hier beschriebenen erfindungsgemäßen Anordnung gemäß jeweils einem Ausführungsbeispiel,
- Figur 4: ein Ablaufdiagramm allgemein für ein Vergleichsverfahren von Vergleichsdaten mit einer Information, und
- Figur 5: ein Ablaufdiagramm zu einem Ausführungsbeispiel des erfindungsgemäßen Verfahrens.

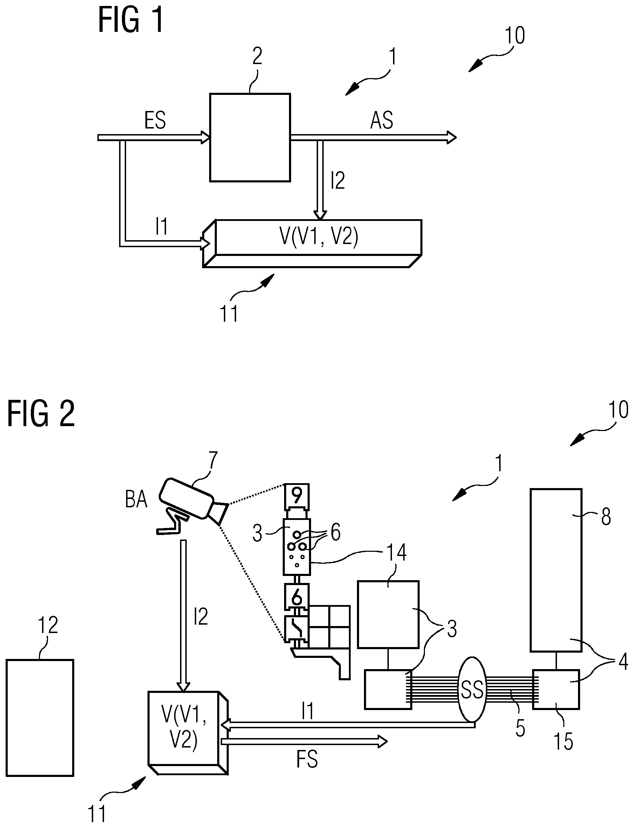

Die Anordnung 10 gemäß dem Ausführungsbeispiel der Figur 1 umfasst ein elektronisches System 1, das dazu ausgebildet ist aus zumindest einem Eingangssignal ES zumindest ein Ausgangssignal AS zu erzeugen. Das elektronische System 1 umfasst einen integrierten Schaltkreis 2, in den das zumindest eine Eingangssignal ES einkoppelbar, eingebbar oder einspeisbar ist. Weiterhin ist das zumindest eine eingekoppelte Eingangssignal ES vom integrierten Schaltkreis 2 zu dem zumindest einen Ausgangssignal AS transformierbar, das aus dem integrierten Schaltkreis 2 auskoppelbar oder ausgebbar ist. Der integrierte Schaltkreis 2 gibt hier das zumindest eine Ausgangssignal AS in Abhängigkeit des zumindest einen Eingangssignals ES vor.

Bei dem zumindest einen Eingangssignal ES und dem zumindest einen Ausgangssignal AS handelt es sich beispielsweise um Zahlenwerte. Weiterhin kann es sich bei dem zumindest einen Ausgangssignal AS beispielsweise um eine Quadratwurzel des zumindest einen Eingangssignals ES handeln. In diesem Fall ist der integrierte Schaltkreis 2 dazu ausgebildet von dem zumindest einen Eingangssignals ES, das ein bestimmter Zahlenwert ist, die Quadratwurzel zu bilden und diese als das zumindest eine Ausgangssignal AS auszugeben.

Weiterhin umfasst die Anordnung eine Überwachungseinheit 11 zur Überwachung von Ausgangssignalen AS des elektronischen Systems 1. Die Überwachungseinheit 11 ist dazu ausgebildet die erste Information I1 zu erfassen, die repräsentativ für das zumindest eine Eingangssignal ES ist. Zudem ist die Überwachungseinheit 11 dazu ausgebildet die zweite Information I2 zu erfassen, die repräsentativ für das zumindest eine Ausgangsignal AS ist.

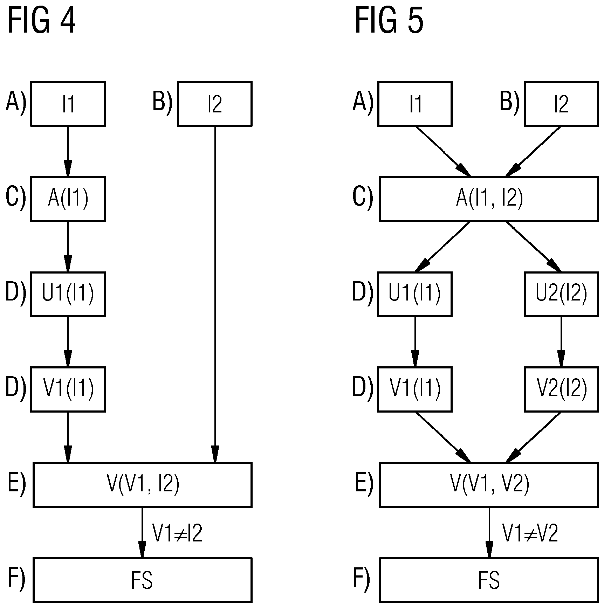

Die Überwachungseinheit 11 umfasst zur Überwachung der Ausgangssignale AS des Weiteren einen Algorithmus A, dem die erste Information I1 und die zweite Information I2 bereitstellbar sind. Der Algorithmus A umfasst in diesem Ausführungsbeispiel eine erste Überwachungskomponente U1, wie beispielsweise in Verbindung mit den Ausführungsbeispielen der Figuren 4 und 5 gezeigt, die dazu ausgebildet ist eine erste Vergleichsinformation V1 in Abhängigkeit der ersten Information I1 zu bestimmen. Die erste Überwachungskomponente U1 umfasst hier ein künstliches neuronales Netzwerk. Das neuronale Netzwerk der ersten Überwachungskomponente U1 ist weiterhin trainierbar ausgebildet.

Handelt es sich bei dem zumindest einen Ausgangssignal AS beispielsweise um die Quadratwurzel des zumindest einen Eingangssignals ES, ist das neuronale Netzwerk der ersten Überwachungskomponente U1 derart trainierbar, dass dem zumindest einen Eingangssignal ES ein entsprechender Zahlenwert zugeordnet wird, der der Quadratwurzel des zumindest einen Eingangssignals ES entspricht. Ist die ersten Überwachungskomponente U1 hinreichend gut trainiert, erzeugt die erste Überwachungskomponente U1 aus dem zumindest einen Eingangssignal ES die erste Vergleichsinformation V1, die der Quadratwurzel des zumindest einen Eingangssignals ES entspricht.

Bei der Überwachung des zumindest einen Ausgangssignals AS, wird die erste Vergleichsinformation V1 mit dem zumindest einen Ausgangssignal AS verglichen. Falls die erste Vergleichsinformation V1 mit dem zumindest einen Ausgangssignal AS nicht übereinstimmt, ist ein Fehlersignal FS zur Signalisierung eines Fehlers des zumindest einen Ausgangssignals AS erzeugbar.

Alternativ oder ergänzend zum Ausführungsbeispiel der Figur 1 umfasst ein elektronische System 1 gemäß dem Ausführungsbeispiel der Figur 2 eine Signalanzeige 3 für Schienenfahrzeuge 12 und eine Steuerkomponente 4 zum Steuern der Signalanzeige 3. In diesem Ausführungsbeispiel ist eine Überwachungseinheit 11 zur Überwachung der Signalanzeige 3 ausgebildet.

Die Signalanzeige 3 umfasst hier einen Signalschaltkasten 13 und einen Signalschirm 14. Der Signalschirm 14 ist dazu ausgebildet optische Signale auszusenden. Die optischen Signale entsprechen hierbei zumindest einem Ausgangssignal AS. Der Signalschirm 14 umfasst hier lichtemittierende Bauteile 6, durch die die optischen Signale aussendbar sind.

Weiterhin umfasst die Steuerkomponente 4 in diesem Ausführungsbeispiel ein elektronisches Stellwerksystem 8 und ein Signalstellteil 15. Die Steuerkomponente 4 und die Signalanzeige 6 sind durch eine Kommunikationsverbindung 5 miteinander verbunden. Durch die Steuerkomponente 4 ist das zumindest eine Eingangssignal ES erzeugbar. Nachfolgend ist das erzeugte zumindest eine Eingangssignal ES über die Kommunikationsverbindung 5 an die Signalanzeige 3 in Form von Steuersignalen SS weiterleitbar. In diesem Ausführungsbeispiel handelt es sich bei dem Steuersignalen SS um elektrische Signale. Diese elektrischen Signale sind direkt an der Kommunikationsverbindung 5 abgreifbar. In diesem Fall repräsentieren die abgegriffenen elektrischen Signale die erste Information I1.

Die optischen Signale, die von der Signalanzeige 3, insbesondere dem Signalschirm 14, aussendbar sind, sind durch eine Bildaufnahme BA durch eine Bilderfassungseinheit 7 erfassbar. Bei der Bilderfassungseinheit 7 handelt es sich hier um eine Videokamera. Die Videokamera ist dabei derart ausgebildet, dass sie die ausgesendeten optischen Signale in die zweite Information I2 transformiert.

Die Überwachungseinheit 11 umfasst zur Überwachung der Signalanzeige 3 ebenfalls einen Algorithmus A, dem die erste Information I1 und die zweite Information I2 bereitstellbar sind. Der Algorithmus A umfasst in diesem Ausführungsbeispiel neben einer ersten Überwachungskomponente U1 auch eine zweite Überwachungskomponente U2, wie beispielsweise in Verbindung mit den Ausführungsbeispielen der Figuren 4 und 5 gezeigt. Die erste Überwachungskomponente U1 ist dazu ausgebildet eine erste Vergleichsinformation V1 in Abhängigkeit der ersten Information I1 zu bestimmen. Die zweite Überwachungskomponente U2 ist dazu ausgebildet eine zweite Vergleichsinformation V1 in Abhängigkeit der zweiten Information I2 zu bestimmen. Die erste Überwachungskomponente U1 und die zweite Überwachungskomponente U2 umfassen hier jeweils ein künstliches neuronales Netzwerk. Die neuronalen Netzwerke sind weiterhin jeweils trainierbar ausgebildet.

Die von der Signalanzeige 3 ausgesendeten optischen Signale entsprechen in diesem Ausführungsbeispiel zumindest einem Signalbegriff. Damit wird der zumindest eine Signalbegriff durch die von der Steuerkomponente 4 erzeugten Steuersignale SS vorgegeben. Die erste Überwachungskomponente U1 ist dazu ausgebildet, der ersten Information I1 zumindest einen Signalbegriff zuzuordnen. Das heißt, die erste Vergleichsinformation V1 ist zumindest ein Signalbegriff. Weiterhin ist die zweite Überwachungskomponente U2 dazu ausgebildet, der zweiten Information I2 zumindest einen Signalbegriff zuzuordnen. Das heißt, die zweite Vergleichsinformation V2 ist ebenfalls zumindest ein Signalbegriff.

Bei der Überwachung der Signalanzeige 3, wird die erste Vergleichsinformation V1 mit der zweiten Vergleichsinformation V2 verglichen. Falls die erste Vergleichsinformation V1 mit der zweiten Vergleichsinformation V2 nicht übereinstimmt, ist ein Fehlersignal FS zur Signalisierung eines Fehlers der Signalanzeige 3 erzeugbar.

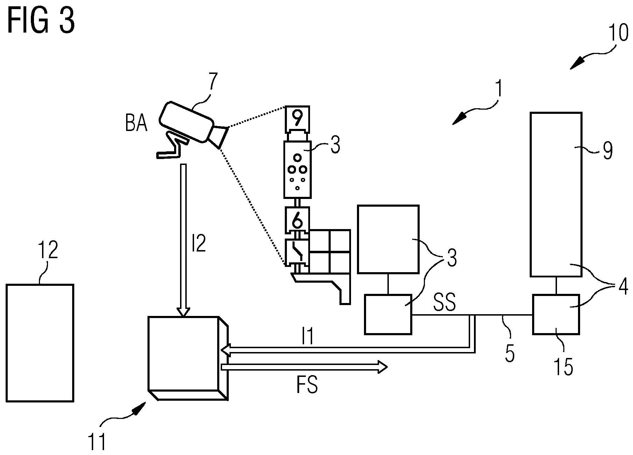

Im Unterschied zum Ausführungsbeispiel der Figur 2 umfasst eine Steuerkomponente 4 gemäß dem Ausführungsbeispiel der Figur 3 unter anderem ein digitales Stellwerksystem 9. Hier entsprechen die Steuersignale SS der Steuerkomponente 3 Telegrammdaten, die in diesem Ausführungsbeispiel direkt die erste Information I1 bilden.

In dem Ablaufdiagramm gemäß dem Ausführungsbeispiel der Figur 4 wird zunächst in einem Schritt A) eine ersten Information I1, die repräsentativ für zumindest ein Eingangssignal ES ist, bereitgestellt. Das zumindest eine Eingangssignal ES und die erste Information I1 sind gemäß dem Ausführungsbeispiel der Figur 1 ausgebildet.

Nachfolgend wird in einem Schritt B) eine zweite Information I2 bereitgestellt, die repräsentativ für das zumindest eine Ausgangssignal AS ist. Auch hier sind das zumindest eine Ausgangssignal AS und die zweite Information I2 gemäß dem Ausführungsbeispiel der Figur 1 ausgebildet.

In einem weiteren Schritt C) wird die erste Information I1 für einen computerimplementierten Algorithmus A bereitgestellt.

Weiterhin umfasst das Verfahren einen Schritt D), in dem eine erste Vergleichsinformation V1 durch den Algorithmus A in Abhängigkeit der ersten Information I1 bestimmt wird. In diesem Ausführungsbeispiel umfasst der Algorithmus A eine erste Überwachungskomponente U1, die dazu ausgebildet ist der ersten Information I1 eineindeutig eine erste Vergleichsinformation V1 zuzuordnen. Damit eine derartige Zuordnung erreichbar ist, wird die erste Überwachungskomponente U1 trainiert. Weiterhin handelt es sich bei der ersten Überwachungskomponente U1 um ein künstliches neuronales Netzwerk, wie beispielsweise in Verbindung mit dem Ausführungsbeispiel der Figur 1 gezeigt.

Nachfolgend wird in einem Schritt E) ein Vergleich V angestellt, der die erste Vergleichsinformation V1 mit der zweiten Information I2 vergleicht.

Falls der Vergleich negativ ist, das heißt falls die Vergleichsinformation V1 mit der zweiten Information I2 nicht übereinstimmt wird in einem weiteren Schritt F) eine Fehlersignal FS zur Signalisierung eines Fehlers erzeugt.

Im Unterschied zum Ablaufdiagramm gemäß dem Ausführungsbeispiel der Figur 4 umfasst ein Algorithmus A im Ablaufdiagramm gemäß dem Ausführungsbeispiel der Figur 5 im Schritt D) neben einer ersten Überwachungskomponente U1 eine zweite Überwachungskomponente U2. Mit der zweiten Überwachungskomponente U2 wird eine zweite Vergleichsinformation V2 in Abhängigkeit der zweiten Information I2 bestimmt. Hier ordnet die zweite Überwachungskomponente U2 der zweiten Information I2 eineindeutig eine zweite Vergleichsinformation V2 zu. Damit eine derartige Zuordnung erreichbar ist, wird die zweite Überwachungskomponente U2 trainiert. Weiterhin handelt es sich bei der zweiten Überwachungskomponente U2 um ein künstliches neuronales Netzwerk, wie beispielsweise in Verbindung mit den Ausführungsbeispielen der Figuren 2 und 3 gezeigt.

Weiterhin wird in einem Schritt E) ein Vergleich V angestellt, der die ersten Vergleichsinformation V1 mit der zweiten Vergleichsinformation V2 vergleicht.

Falls die erste Vergleichsinformation V1 nicht mit der zweiten Vergleichsinformation V2 übereinstimmt, wird in einem weiteren Schritt F) eine Fehlersignal FS zur Signalisierung eines Fehlers erzeugt.

Obwohl die Erfindung anhand von Ausführungsbeispielen detailliert dargestellt und beschrieben wurde, ist die Erfindung nicht auf die offenbarten Ausführungsbeispiele und die darin erläuterten konkreten Merkmalskombinationen beschränkt. Weitere Variationen der Erfindung können von einem Fachmann erhalten werden, ohne den Schutzumfang der beanspruchten Erfindung zu verlassen.

### Bezugszeichenliste

- 1: elektronischen Systems
- 2: integrierter Schaltkreis
- 3: Signalanzeige
- 4: Steuerkomponente
- 5: Kommunikationsverbindung
- 6: lichtemittierende Bauteile
- 7: Bilderfassungseinheit
- 8: elektronisches Stellwerksystem
- 9: digitales Stellwerksystem
- 10: Anordnung
- 11: Überwachungseinheit
- 12: Schienenfahrzeug
- 13: Signalschaltkasten
- 14: Signalschirm
- 15: Signalstellteil

- AS: Ausgangssignal
- ES: Eingangssignal
- SS: Steuersignal
- FS: Fehlersignal
- I1: erste Information
- I2: zweite Information
- V1: erste Vergleichsinformation
- V2: zweite Vergleichsinformation
- V: Vergleich
- U1: erste Überwachungskomponente
- U2: zweite Überwachungskomponente

## Patentansprüche

1. Verfahren zur Überwachung von Ausgangssignalen (AS) eines elektronischen Systems (1), wobei
- im elektronischen System (1) aus zumindest einem Eingangssignal (ES) zumindest ein Ausgangssignal (AS) erzeugt wird, mit den Schritten:
A) Erfassen einer ersten Information (I1), die repräsentativ für das zumindest eine Eingangssignal (ES) ist,
B) Erfassen einer zweiten Information (I2), die repräsentativ für das zumindest eine Ausgangssignal (AS) ist,
C) Bereitstellen der ersten Information (I1) und der zweiten Information (I2) für einen computerimplementierten Algorithmus (A),
D) Bestimmen einer ersten Vergleichsinformation (V1) durch den Algorithmus (A) in Abhängigkeit der ersten Information (I1), und Bestimmen einer zweiten Vergleichsinformation (V2) durch den Algorithmus (A) in Abhängigkeit der zweiten Information (I2),
E) Vergleich der ersten Vergleichsinformation (V1) mit der zweiten Vergleichsinformation (V2), und, falls der Vergleich negativ ist,
F) Erzeugen eines Fehlersignals (FS) zur Signalisierung eines Fehlers, wobei
- das elektronische System (1) eine Signalanzeige (3) für Schienenfahrzeuge (12) und eine Steuerkomponente (4) zum Steuern der Signalanzeige (3) umfasst,
- Zustände der Signalanzeige (3) durch die Steuerkomponente (4) durch Steuersignale (SS) gesteuert werden,
- die erste Information (I1) die Steuersignale (SS) umfasst oder aus den Steuersignalen (SS) erzeugte Messsignale umfasst und
- die zweite Information (I2) eine Bildaufnahme (BA) zumindest eines der Zustände der Signalanzeige (3) umfasst.

2. Verfahren nach Anspruch 1, wobei im Schritt D)
- der Algorithmus (A) eine erste Überwachungskomponente (U1) und/oder eine zweite Überwachungskomponente (U2) umfasst,
- die erste Überwachungskomponente (U1) des Algorithmus (A) trainiert wird, und/oder
- die zweite Überwachungskomponente (U2) des Algorithmus (A) trainiert wird.

3. Verfahren nach dem Anspruch 2, wobei
- die erste Überwachungskomponente (U1) ein erstes künstliches neuronales Netzwerk umfasst und/oder
- die zweite Überwachungskomponente (U1) ein zweites künstliches neuronales Netzwerk umfasst.

4. Verfahren nach einem der vorhergehenden Ansprüche, wobei
- die Signalanzeige (3) lichtemittierende Bauteile (6) umfasst, und
- die Bildaufnahme (BA) durch eine Bilderfassungseinheit (7) erzeugt wird.

5. Verfahren nach einem der vorhergehenden Ansprüche, wobei
- die Steuerkomponente (4) ein elektronisches Stellwerksystem (8) umfasst, und
- die Steuersignale (SS) der Steuerkomponente (4) einem elektrischen Strom entsprechen, oder
- die Steuerkomponente (4) ein digitales Stellwerksystem (9) umfasst, und
- die Steuersignale (SS) der Steuerkomponente (4) Telegrammdaten entsprechen.

6. Verfahren nach einem der vorhergehenden Ansprüche, wobei der Zustand der Signalanzeige (3) ausschließlich durch das Verfahren überwacht wird.

7. Computerprogramm, umfassend Befehle, die bei der Ausführung des Computerprogramms durch einen Computer diesen veranlassen, das Verfahren nach einem der Ansprüche 1 bis 6 auszuführen.

8. Anordnung (10) mit
- einem elektronischen System (1), das dazu ausgebildet ist aus zumindest einem Eingangssignal (ES) zumindest ein Ausgangssignal (AS) zu erzeugen,
- wobei das elektronische System (1) eine Signalanzeige (3) für Schienenfahrzeuge (12) und eine Steuerkomponente (4) zum Steuern der Signalanzeige (7) umfasst, und
- einer Überwachungseinheit (11) zur Überwachung der Ausgangssignale (AS), wobei
- die Überwachungseinheit (11) zur Überwachung der Signalanzeige (3) ausgebildet ist, wobei
- die Überwachungseinheit (11) so ausgebildet ist, dass diese ein Verfahren nach einem der Ansprüche 1 bis 6 ausführt.

## Claims

1. Method for monitoring output signals (AS) of an electronic system (1), wherein
- in the electronic system (1) at least one output signal (AS) is generated from at least one input signal (ES),
with the steps:
A) Detecting a first item of information (II), which is representative of the at least one input signal (ES),
B) Detecting a second item of information (12), which is representative of the at least one output signal (AS),
C) Providing the first item of information (II) and the second item of information (12) for a computer-implemented algorithm (A),
D) Determining a first item of comparison information (V1) by the algorithm (A) as a function of the first item of information (II), and determining a second item of comparison information (V2) by means of the algorithm (A) as a function of the second item of information (12),
E) Comparing the first item of comparison information (V1) with the second item of comparison information (V2) and if the comparison is negative,
F) Generating an error signal (FS) for signalling an error, wherein
- the electronic system (1) comprises a signal display (3) for rail vehicles (12) and a control component (4) for controlling the signal display (3),
- states of the signal displays (3) are controlled by the control component (4) by means of control signals (SS),
- the first item of information (II) comprises the control signals or measuring signals generated from the control signals (SS) and
- the second item of information (12) comprises an image acquisition (BA) of at least one of the states of the signal display (3).

2. Method according to claim 1, wherein in step D)
- the algorithm (A) comprises a first monitoring component (U1) and/or a second monitoring component (U2),
- the first monitoring component (U1) of the algorithm (A) is trained and/or
- the second monitoring component (U2) of the algorithm (A) is trained.

3. Method according to claim 2, wherein
- the first monitoring component (UI) comprises a first artificial neural network and/or
- the second monitoring component (U1) comprises a second artificial neural network.

4. Method according to one of the preceding claims, wherein
- the signal display (3) comprises light-emitting components (6), and
- the image capture (BA) is generated by an image acquisition unit (7).

5. Method according to one of the preceding claims, wherein
- the control component (4) comprises an electronic signal box system (8), and
- the control signals (SS) of the control component (4) correspond to an electrical current, or
- the control component (4) comprises a digital signal box system (9), and
- the control signals (SS) of the control component (4) correspond to telegram data.

6. Method according to one of the preceding claims, wherein the state of the signal display (3) is monitored exclusively by the method.

7. Computer program, comprising commands, which, when the computer program is executed by a computer, trigger this to execute the method according to one of claims 1 to 6.

8. Arrangement (10) with
- a electronic system (1), which is embodied to generate at least one output signal (AS) from at least one input signal (ES),
- wherein the electronic system (1) comprises a signal display (3) for rail vehicles (12) and a control component (4) for controlling the signal display (7), and
- a monitoring unit (11) for monitoring the output signals (AS), wherein
- the monitoring unit (11) is embodied to monitor the signal display (3), wherein,
- the monitoring unit (11) is embodied so that this executes a method according to one of claims 1 to 6.

## Revendications

1. Procédé de contrôle de signaux (AS) de sortie d'un système (1) électronique, dans lequel
- on produit dans le système (1) électronique au moins un signal (AS) de sortie, à partir d'au moins un signal (ES) d'entrée, comprenant les stades dans lesquels :
A) on saisit une première information (I1), qui est représentative du au moins un signal (ES) d'entrée,
B) on saisit une deuxième information (I2), qui est représentative du au moins un signal (AS) de sortie,
C) on porte la première information (I1) et la deuxième information (I2) dans un algorithme (A) mis en œuvre par ordinateur,
D) on détermine une première information (V1) de comparaison par l'algorithme (A) en fonction de la première information (I1), et on détermine une deuxième information (V2) de comparaison par l'algorithme (A) en fonction de la deuxième information (I2),
E) on compare la première information (V1) de comparaison à la deuxième information (V2) de comparaison et, si la comparaison est négative,
F) on produit un signal (FS) de défaillance pour la signalisation d'une défaillance,
dans lequel
- le système (1) électronique comprend un affichage (3) de signal pour des véhicules (12) ferroviaires et un composant (4) de commande pour la commande de l'affichage (3) de signal,
- on commande des états de l'affichage (3) de signal par le composant (4) de commande par des signaux (SS) de commande,
- la première information (I1) comprend les signaux (SS) de commande ou comprend des signaux de mesure produits à partir des signaux (SS) de commande,
- la deuxième information (I2) comprend une prise de vue (BA) d'au moins l'un des états de l'affichage (3) de signal.

2. Procédé suivant la revendication 1, dans lequel, dans le stade D),
- l'algorithme (A) comprend un premier composant (U1) de contrôle et/ou un deuxième composant (U2) de contrôle,
- on fait subir un apprentissage au premier composant (U1) de contrôle de l'algorithme (A), et/ou
- on fait subir un apprentissage au deuxième composant (U2) de contrôle de l'algorithme (A).

3. Procédé suivant la revendication 2, dans lequel
- le premier composant (U1) de contrôle comprend un premier réseau neuronal artificiel et/ou
- le deuxième composant (U1) de contrôle comprend un deuxième réseau neuronal artificiel.

4. Procédé suivant l'une des revendications précédentes, dans lequel
- l'affichage (3) de signal comprend des composants (6) émettant de la lumière, et
- on produit la prise de vue (BA) par une unité (7) de détection d'image.

5. Procédé suivant l'une des revendications précédentes, dans lequel
- le composant (4) de commande comprend un système (8) électronique de poste d'aiguillage, et
- les signaux (SS) de commande du composant (4) de commande correspondent à un courant électrique, ou
- le composant (4) de commande comprend un système (9) numérique de poste d'aiguillage, et
- les signaux (SS) de commande du composant (4) de commande correspondent à des données de télégramme.

6. Procédé suivant l'une des revendications précédentes, dans lequel on contrôle l'état de l'affichage (3) de signal exclusivement par le procédé.

7. Programme d'ordinateur comprenant des instructions, qui, lors de la réalisation du programme d'ordinateur par un ordinateur, font que celui-ci effectue le procédé suivant l'une des revendications 1 à 6.

8. Installation (10) comprenant
- un système (1) électronique, qui est constitué pour produire au moins un signal (AS) de sortie à partir d'un signal (ES) d'entrée,
- dans laquelle le système (1) électronique comprend un affichage (3) de signal pour des véhicules (12) ferroviaires et un composant (4) de commande pour la commande de l'affichage (7) de signal, et
- une unité (11) de contrôle pour le contrôle des signaux (AS) de sortie, dans laquelle
- l'unité (11) de contrôle est constituée pour le contrôle de l'affichage (3) de signal, dans laquelle
- l'unité (11) de contrôle est constituée de manière à effectuer un procédé suivant l'une des revendications 1 à 6.
